# FASCICULE DE BREVET EUROPEEN

(11) **EP 3 755 606 B1**
(45) Date de publication et mention de la délivrance du brevet: **02.03.2022**
(21) Numéro de dépôt: 19710004.3
(22) Date de dépôt: 23.01.2019
(51) Int. Cl.: B62D 25/04, B62D 65/02

(54) **PROCEDE D'ASSEMBLAGE ENTRE EUX D'ELEMENTS DE CARROSSERIE COMPOSANT UNE DOUBLURE D'AILE LATERALE ARRIERE D'UN VEHICULE AUTOMOBILE**
VERFAHREN ZUM ZUSAMMENBAUEN VON KAROSSERIEELEMENTEN ZUR BILDUNG EINER HINTEREN SEITENFLÜGELVERKLEIDUNG EINES KRAFTFAHRZEUGS
METHOD FOR ASSEMBLING TOGETHER BODYWORK ELEMENTS MAKING UP A MOTOR VEHICLE REAR SIDE WING LINING

(30) Priorité: 22.02.2018 FR 1851508
(43) Date de publication de la demande: 30.12.2020
(73) Titulaire: PSA Automobiles SA, 78300 Poissy (FR)
(72) Inventeur: GAUTIER, Stephane, 35480 Guipry Messac (FR)
(86) Numéro de dépôt international: PCT/FR2019/050147
(87) Numéro de publication internationale: WO 2019/162584

(56) Documents cités:
- WO-A1-2015/037444
- CN-U- 204 507 021
- FR-A1- 2 920 397
- JP-A- 2015 196 467

## Description

La présente invention relève du domaine des véhicules automobiles et plus particulièrement des procédés d'assemblage des ensembles ou des sousensembles d'éléments de carrosserie équipant les véhicules automobiles. L'invention porte plus spécifiquement sur les modalités d'assemblage entre eux d'éléments de carrosserie composant une doublure d'aile latérale arrière d'un véhicule automobile.

Les véhicules automobiles comprennent une caisse montée sur une base roulante et revêtue de panneaux de carrosserie pour son habillage extérieur. L'habillage extérieur de la caisse procure notamment au véhicule son aérodynamisme et/ou sa ligne esthétique.

La caisse comprend une armature de caisse sur laquelle lesdits panneaux sont rapportés. L'armature de caisse est composée d'ossatures, dont essentiellement une ossature de pavillon surplombant une ossature de soubassement. Les ossatures sont chacune essentiellement composées de longerons et de traverses, et sont reliées entre-elles via des longerons.

Ainsi, l'armature de caisse forme un ensemble d'éléments de carrosserie robuste délimitant une cellule rigide du véhicule. L'armature de caisse est aussi couramment utilisée pour l'ancrage de divers accessoires du véhicule, tels que notamment des accessoires qui sont installés dans l'habitacle du véhicule ménagé à l'intérieur de la cellule.

L'armature de caisse est localement renforcée par des doublures qui sont montées sur la caisse en interposition entre l'armature de caisse et les panneaux de carrosserie formant l'habillage extérieur de la caisse.

Les doublures sont composées de divers éléments de carrosserie assemblés entre eux, par soudage notamment. Les composants d'une doublure comprennent essentiellement des profilés de rigidification de plaques de forme, voire encore des renforts spécifiques pour l'ancrage des dits accessoires à l'armature de caisse. Les profilés et les plaques de forme d'une doublure sont diversement agencés entre eux et individuellement conformés selon la destination spécifique de la doublure. La doublure est ainsi configurée pour procurer sa résistance aux efforts et/ou pour épouser localement la conformation générale de l'armature de caisse selon l'emplacement sur la caisse affecté à la doublure.

Dès lors, il se pose le problème relevant des modalités d'assemblage des composants d'une telle doublure, à une station d'assemblage que comprend une chaîne de production d'un véhicule automobile. Classiquement, une telle station d'assemblage regroupe plusieurs postes de soudage auxquels les composants de la doublure sont successivement assemblés entre eux selon une procédure préalablement définie.

Plus spécifiquement concernant une doublure d'aile latérale arrière, celle-ci est essentiellement composée de profilés de rigidification et de plaques de forme ménageant respectivement un gousset et une doublure de custode. Le gousset est configuré pour fixer la doublure d'aile à l'ossature de pavillon et la doublure de custode est configurée pour fixer la doublure d'aile à l'ossature de soubassement.

Le gousset comprend au moins une plaque de forme conformée pour être fixée sur une traverse arrière et sur un longeron de l'ossature de pavillon. La ou les plaques de forme du gousset sont rigidifiées par au moins un profilé, pouvant subsidiairement être exploité pour fixer le gousset à la doublure de custode. Le gousset et/ou la custode peuvent aussi être pourvus d'au moins un organe d'ancrage d'un accessoire du véhicule, tel que par exemple un enrouleur d'une ceinture de sécurité arrière.

La doublure de custode est affectée au doublage d'une custode formant une aile latérale arrière du véhicule comportant un passage de roue arrière. La doublure de custode comprend au moins une plaque de forme conformée pour prolonger le gousset vers l'ossature de soubassement. La doublure de custode est rigidifiée par au moins un profilé et est pourvue d'au moins un profilé de rigidification de l'aile arrière du véhicule en bordure du passage de roue arrière. La doublure de custode est aussi munie d'au moins un renfort pour sa fixation sur l'ossature de soubassement, et subsidiairement d'au moins un organe d'ancrage d'un accessoire du véhicule, tel que par exemple une banquette arrière installée dans l'habitacle.

Classiquement, le gousset et la doublure de custode sont réalisés par assemblage successifs des composants qu'ils comprennent respectivement selon une procédure prédéfinie, à divers postes de soudage regroupés dans diverses stations de soudage de la station d'assemblage qui leurs sont affectés. Puis le gousset et la doublure de custode sont assemblés entre eux à une station de soudage terminale en sortie de laquelle la doublure d'aile est achevée.

Le document JP2015196467 divulgue une doublure d'aile latérale comprenant une structure de plaques de forme et des profilés de renfort. Il n'est pas divulgue que les profilés forment une armature et le procédé d'assemblage n'est pas décrit.

Le document CN204507021 divulgue aussi une doublure d'aile latérale comprenant une structure de plaques de forme et deux profilés de renfort qui ne sont pas en appui. Les profilés ne forment donc pas une armature.

Le document WO2015037444 divulgue un véhicule avec une ossature de profilés et une structure d'aile arrière de plaques de forme dont la connexion n'est pas clairement décrite.

Dans ce contexte, l'invention a pour objet un procédé d'assemblage des composants d'une doublure d'aile latérale arrière. L'invention a aussi pour objet une station d'assemblage entre eux de composants d'une telle doublure d'aile organisée pour la mise en œuvre d'un procédé conforme à l'invention. L'invention a aussi pour objet une dite doublure d'aile obtenue à partir d'un procédé conforme à l'invention. L'invention a encore pour objet un véhicule automobile pourvu d'une telle doublure d'aile.

Le problème général que cherche à résoudre l'invention est d'améliorer les modalités d'obtention de la doublure d'aile, pour notamment réduire les coûts de sa production. A cette fin, il est cependant à tenir compte de diverses contraintes et des compromis sont à rechercher pour notamment concilier diverses solutions répondant de manière satisfaisante à ces contraintes.

La procédure d'assemblage des composants de la doublure d'aile peut être recherchée de manière à réduire le nombre d'opérations à effectuer, avec pour avantages de limiter le nombre de postes de soudage et l'encombrement de la station d'assemblage et/ou d'accroître les cadences de production de la doublure d'aile.

Cependant tel que précédemment décrit, une doublure d'aile latérale arrière est susceptible de comprendre un nombre conséquent de composants. Ceci complexifie les différentes étapes de soudage à réaliser pour obtenir la doublure d'aile. Il est à éviter qu'une simplification des modalités d'assemblage entre eux des différents composants de la doublure d'aile ne soit obtenue au détriment de sa robustesse et/ou de ses diverses fonctionnalités, et par suite une réduction du nombre potentiel de ses composants n'est pas souhaitable.

Il est aussi à tenir compte des règles liées à la sécurité du véhicule, notamment au regard du nombre de tôles assemblées conjointement entre elles en une même couche par un même point de soudure. Ceci interfère non seulement sur la procédure d'assemblage des composants de la doublure d'aile entre eux, mais aussi sur l'organisation même d'un tel assemblage pour limiter le cumul des tôles à assembler conjointement par un ou plusieurs points de soudure.

Les buts de la présente invention s'inscrivent notamment dans le cadre du problème et des contraintes précédemment mentionnés, à titre indicatif non restrictif. Il est notamment visé par l'invention de proposer un procédé d'assemblage de la doublure d'aile permettant au moins :
-) de réduire les coûts de production de la doublure d'aile et d'améliorer ses cadences de production. Il est notamment recherché à cet effet de limiter le nombre de postes de soudage, d'outillages et/ou de manipulateurs nécessaires à l'obtention de la doublure d'aile. Outre la simplification ainsi obtenue des modalités d'assemblage des composants de la doublure d'aile, il est aussi recherché en parallèle une réduction de l'encombrement en atelier de la station d'assemblage des composants de la doublure d'aile entre eux.
-) d'optimiser les fonctionnalités de la doublure d'aile, notamment au regard de ses facultés à former un organe robuste pouvant être fermement fixé à l'armature de caisse et sur lequel des panneaux d'habillage extérieur du véhicule sont prévus d'être fixés, et/ou sur lequel divers accessoires peuvent d'être ancrés tels que notamment des accessoires installés dans l'habitacle du véhicule,
-) d'assembler entre eux par soudage les composants de la doublure d'aile potentiellement en nombre conséquent, sous contrainte d'une limitation du nombre d'éléments de carrosserie assemblés conjointement entre eux par au moins un point de soudure pour répondre aux contraintes de sécurité du véhicule,

Les buts visés par la présente invention sont atteints isolément ou en combinaison par application des dispositions qui suivent.

Le procédé de l'invention est un procédé d'assemblage entre eux des composants en tôle d'une doublure d'aile latérale arrière d'un véhicule automobile, lesdits composants comprenant au moins des profilés de rigidification et des plaques de forme que comporte la doublure d'aile à produire. Selon l'invention, le procédé comprend les opérations suivantes :
-) une première opération réalisée à un premier poste de soudage, est une opération d'assemblage entre eux de l'ensemble des profilés que comprend la doublure d'aile en formant une armature de profilés,
-) une deuxième opération réalisée à un deuxième poste de soudage, est une opération d'assemblage entre elles de l'ensemble des plaques de forme que comprend la doublure d'aile, en formant une structure de plaques de forme, puis
-) une troisième opération réalisée à un troisième poste de soudage, est une opération d'assemblage entre elles de l'armature de profilés et de la structure de plaques de forme.

Autrement dit, l'ensemble des profilés que comprend la doublure d'aile sont assemblés entre eux à un même premier poste de soudage, indépendamment de leur fonction propre et/ou de leurs affectations à l'une et/ou l'autre d'une pluralité de plaques de forme que comprend la doublure d'aile. L'ensemble des plaques de forme que comprend la doublure d'aile sont assemblés entre elles à un même deuxième poste de soudage en l'absence d'au moins un profilé pouvant être dédié à un assemblage des plaques de forme entre elles. Puis, l'armature de profilés obtenue en sortie du premier poste de soudage et la structure de plaques de forme obtenue en sortie du deuxième poste de soudage sont assemblées entre elles au troisième poste de soudage, en sortie duquel la doublure d'aile est obtenue.

Le nombre de poste de soudage équipant la station de soudage est ainsi limité à trois postes de soudage et nécessite un nombre réduit d'outillages et/ou de manipulateurs. L'opération de formation de l'armature de profilés au premier poste de soudage et l'opération de formation de la structure de plaques de forme au deuxième poste de soudage, peuvent être réalisées simultanément ou autrement dit en parallèle en améliorant ainsi les cadences de production.

La configuration individuelle et/ou le nombre des profilés de rigidification et/ou des plaques de forme peuvent être déterminés pour parfaire la robustesse et/ou les fonctionnalités de la doublure d'aile, sans affecter les avantages de gain de production obtenus par la mise en œuvre du procédé de l'invention.

On notera à ce stade de la description qu'un moyen de reconnaissance d'une doublure d'aile relevant de l'invention et obtenue par le procédé tel que décrit, est son organisation en une armature de profilés formée d'un assemblage entre eux au moins deux à deux de l'ensemble des profilés de rigidification que comprend la doublure d'aile, indépendamment d'un assemblage entre elles des plaques de forme.

Selon une forme de réalisation, la première opération comprend au moins un assemblage entre eux d'un jeu de profilés formant conjointement un organe dédié à la rigidification d'une aile arrière du véhicule en bordure d'un passage de roue qu'elle comporte, d'au moins un profilé de jonction entre au moins deux plaques de forme que comprend la doublure d'aile et d'au moins un profilé raidisseur de l'une au moins des plaques de forme.

Selon une forme de réalisation, la deuxième opération comprend au moins un assemblage entre elles d'au moins deux plaques de forme, ou par analogie d'au moins deux groupes de plaques de forme à assembler entre elles, formant respectivement une doublure de custode et un gousset disposés en prolongement l'un de l'autre et dédiés à la fixation de la doublure d'aile à une à une armature de caisse du véhicule.

Selon une forme de réalisation, la deuxième opération comprend au moins un assemblage à l'une au moins des plaques de forme, d'au moins un renfort d'ancrage dédié à l'ancrage d'au moins un accessoire du véhicule sur la doublure d'aile. De tels renforts d'ancrage sont typiquement dédiés à la fixation au moins partielle d'un ou de plusieurs accessoires du véhicule à l'armature de caisse via la doublure d'aile. De tels accessoires sont par exemple un enrouleur d'une ceinture de sécurité et/ou une banquette arrière installée à l'intérieur de l'habitacle du véhicule. Le ou les renforts d'ancrage sont susceptibles d'être fixés au gousset et/ou à la doublure de custode.

Selon une forme de réalisation, la deuxième opération comprend au moins un assemblage à l'une au moins des plaques de forme d'au moins un renfort de fixation dédié à la fixation de la doublure d'aile à une ossature de soubassement que comprend la caisse du véhicule. Un tel renfort de fixation, potentiellement issu d'un matériau différent de celui des plaques de forme, est notamment fixé à la base de la doublure de custode lors de la deuxième opération.

Selon une forme de réalisation, la troisième opération comprend au moins une fixation d'au moins un profilé de l'armature de profilés conjointement avec au moins deux plaques de forme de la structure de plaques de forme préalablement assemblées l'une à l'autre lors de la deuxième opération. La troisième opération peut aussi comprendre une fixation d'au moins un profilé isolément avec une plaque de forme de la structure de plaques de forme.

Plus spécifiquement selon une forme de réalisation, la troisième opération comprend une fixation avec au moins deux plaques de forme de la structure de plaques de forme, d'au moins un profilé de l'armature de profilés procurant une rigidification globale de la doublure d'aile.

Plus précisément la doublure d'aile comprenant un gousset prolongé suivant une direction verticale par une doublure de custode, au moins un profilé de rigidification globale de la doublure d'aile constitutif de l'armature de profilés est fixé conjointement sur au moins une plaque de forme constitutive du gousset et sur au moins une plaque de forme constitutive de la doublure de custode, en s'étendant suivant ladite direction verticale.

Plus spécifiquement encore selon une forme de réalisation, la troisième opération comprend une fixation dudit jeu de profilés avec au moins une plaque de forme de la structure de plaques de forme, notamment constitutive de la doublure de custode. Au moins un profilé dudit jeu de profilés prolonge ladite au moins une plaque de forme en étant notamment dédié à la rigidification d'une aile latérale arrière du véhicule en bordure d'un passage de roue arrière qu'elle comporte.

Plus spécifiquement encore selon une forme de réalisation, la troisième opération comprend une fixation d'au moins un profilé de l'armature de profilés avec au moins un dit renfort d'ancrage constitutif de la structure de plaques de forme, et/ou une fixation d'au moins un profilé de l'armature de profilés avec au moins un dit renfort de fixation constitutif de la structure de plaques de forme.

Les modalités de réalisation de la doublure d'aile selon un procédé conforme à l'invention autorisent le respect de règles de sécurisation du véhicule automobile, notamment au regard du nombre de tôles superposées en une même couche et fixées entre elles via au moins un même point de soudure.

Plus particulièrement pour éviter un excès d'épaisseurs cumulées de tôles fixées conjointement les unes aux autres via au moins un point de soudure, il est fait le choix de favoriser la fixation entre eux des profilés constitutifs de l'armature de profilés, et en cas de besoin de ménager une échancrure dans l'une au moins des plaques de forme pour éviter un cumul excessif d'épaisseurs de tôles devant être fixées conjointement les unes aux autres via au moins un point de soudure.

Ainsi selon une forme de réalisation, la troisième opération est réalisée par soudage entre elles de tôles constitutives des composants de la doublure d'aile, via des points de soudure reliant entre elles au plus trois épaisseurs de tôles. Le procédé comprend au besoin une opération préalable de formation d'un dégagement dans au moins une plaque de forme constitutive de la structure de plaques de forme. Il compris que ledit besoin est relatif à une réduction du nombre de tôles fixées conjointement les unes aux autres via au moins un même point de soudure.

L'invention a aussi pour objet une station d'assemblage entre eux de composants d'une doublure d'aile latérale arrière d'un véhicule automobile configurée pour la mise en œuvre d'un procédé conforme à l'invention.

La station d'assemblage de l'invention est essentiellement reconnaissable en ce qu'elle comprend :
-) un premier poste de soudage entre eux des composants de l'armature de profilés, en sortie duquel l'armature de profilés est obtenue,
-) un deuxième poste de soudage entre eux des composants de la structure de plaques de forme, en sortie duquel la structure de plaques de forme est obtenue,
-) un troisième poste de soudage entre elles de l'armature de profilés et de la structure de plaques de forme, en sortie duquel la doublure d'aile est achevée.

Une telle station d'assemblage comprend, en tout et pour tout, trois postes de soudage essentiels qui sont suffisants pour mettre en œuvre le procédé de l'invention. Il est cependant compris que des postes de travail annexes, y compris des postes de soudage annexes, peuvent compléter l'un au moins des postes de soudage essentiels à la mise en œuvre du procédé de l'invention et/ou compléter la station d'assemblage, sans déroger à aux règles délivrées par l'invention considérées isolément ou en combinaison.

L'invention a aussi pour objet une doublure d'aile latérale arrière d'un véhicule automobile comprenant un ensemble de profilés et de plaques de forme fixés entre eux et obtenue par mise en œuvre d'un procédé conforme à l'invention.

La doublure d'aile de l'invention est reconnaissable en ce qu'elle comprend une dite armature de profilés composée desdits profilés solidaires entre eux en formant un premier ensemble monobloc, et une dite structure de plaques de forme composée desdites plaques de forme solidaires entre elles en formant un deuxième ensemble monobloc. L'armature de profilés et la structure de plaques de forme sont assemblées l'une à l'autre par fixation des plaques de forme avec au moins un profilé de l'armature de profilés, en étant dissociables l'une de l'autre sans perte de leur intégrité au regard de la conservation de l'intégralité des composants respectifs du premier ensemble monobloc et du deuxième ensemble monobloc.

Autrement dit, l'armature de profilés formée du premier ensemble monobloc d'une part, et la structure de plaques de forme formée du deuxième ensemble monobloc d'autre part, sont dissociables l'une de l'autre en conservant un assemblage monobloc des composants qu'elles comprennent respectivement.

Selon une forme de réalisation, les tôles qui sont constitutives de composants respectifs de la doublure d'aile et qui sont au moins en partie superposées en une couche de tôles, sont fixées entre elles conjointement par au moins un même point de soudure en une dite couche de tôles comprenant au plus trois épaisseurs de tôles.

Selon une forme de réalisation, l'une quelconque au moins des plaques de forme comporte au moins un dégagement dans le périmètre duquel est ménagé au moins un point de soudure fixant conjointement entre elles au plus trois tôles participantes d'une même couche de tôles superposées.

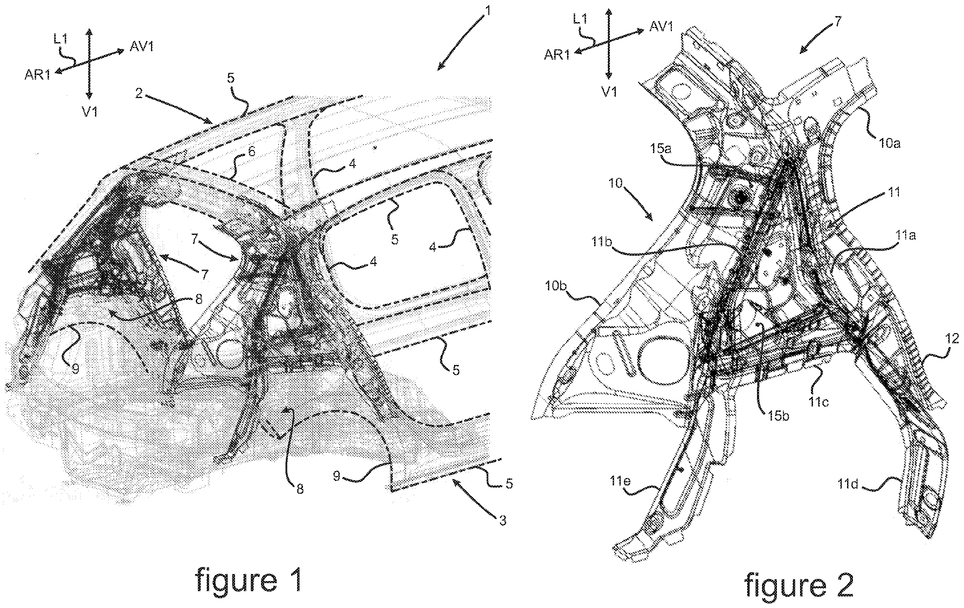

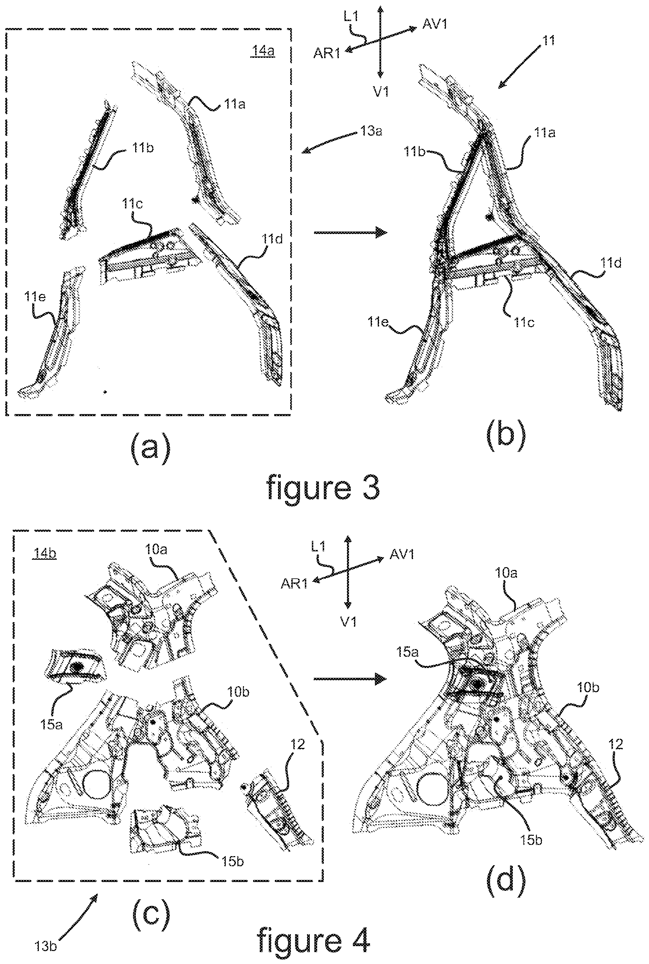

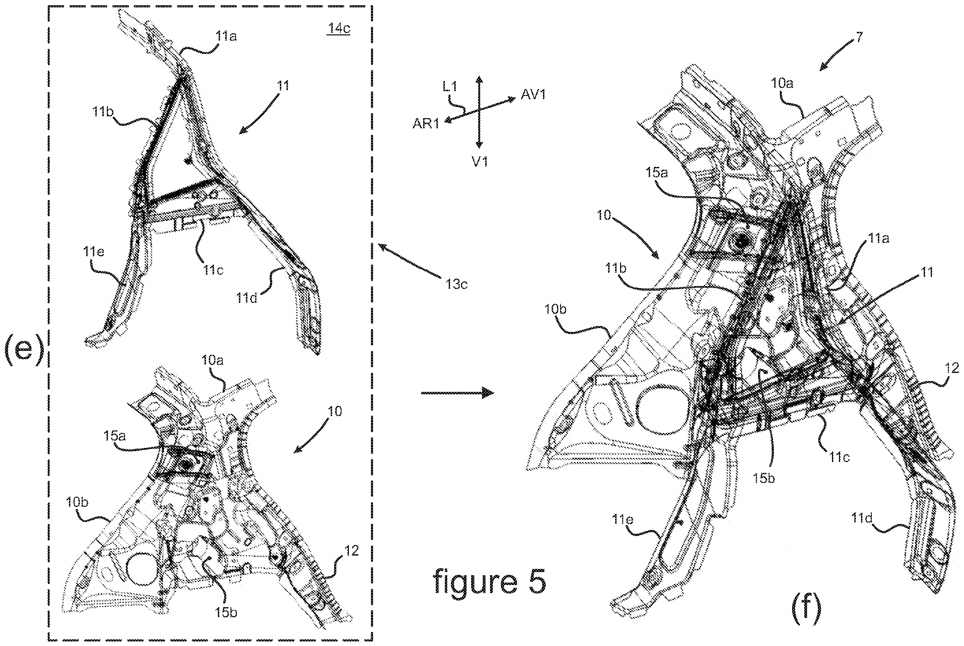

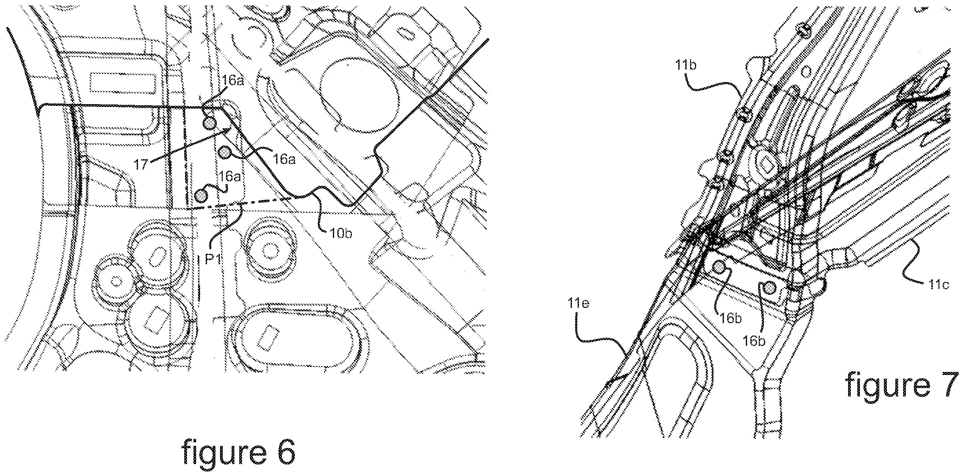

Un exemple de réalisation de la présente invention va être décrit en relation avec les figures des planches annexées, dans lesquelles :
-) la figure 1 est une illustration partielle en perspective arrière d'un véhicule automobile équipé de doublures d'ailes latérales respectivement droit et gauche selon un exemple de réalisation de l'invention.
-) la figure 2 est une illustration en perspective d'une doublure d'aile selon l'exemple de réalisation représenté sur la figure 1.
-) les figures 3 à 5 sont chacune composées de schémas respectivement (a) et (b) pour la figure 3, (c) et (d) pour la figure 4 et (e) et (f) pour la figure 5, qui illustrent un exemple de procédé conforme à l'invention pour assembler entre eux des composants des doublures d'aile représentées sur les figures 1 et 2,
-) les figures 6 et 7 sont des détails respectifs des doublures d'aile représentées sur les figures 1 et 2, ainsi que sur le schéma (f) de la figure 5.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur la figure 1, une armature de caisse 1 d'un véhicule automobile comprend typiquement une ossature de pavillon 2 et une ossature de soubassement 3 reliées entre elles par des montants latéraux 4. Les ossatures 2,3 sont notamment chacune essentiellement formées de longerons 5 et de traverses 6 assemblés entre eux.

Des doublures d'ailes 7 latérales arrière sont classiquement fixées sur l'armature de caisse 1, en interposition entre l'armature de caisse 1 et des ailes latérales arrière 8 d'habillage extérieur du véhicule. Les ailes latérales comportent chacune un passage de roue 9 arrière.

Plus particulièrement sur les figures 2 et 5, les doublures d'aile 7 sont essentiellement chacune formées de plaques de forme 10a, 10b et de profilés 11a-11e de rigidification qui sont assemblés entre eux par soudage. Les plaques de forme 10a, 10b comprennent un gousset 10a et une doublure de custode 10b. Le gousset 10a est disposé en zone supérieure de la doublure d'aile 7 et est verticalement prolongée par la doublure de custode 10b.

Le gousset 10a et la doublure de custode 10b sont fixés entre eux en formant conjointement une structure de plaques de forme 10 représentée sur le schéma (d) de la figure 4, qui est fixée à une armature de profilés 11 composée desdits profilés 11a-11e et représentée sur le schéma (b) de la figure 3.

Sur la figure 1, le gousset 10a est fixé à un montant 4 arrière et à l'ossature de pavillon 2 via des branches concourantes qu'il comporte et qui sont configurées pour être respectivement fixées à un longeron 5 et à une traverse 6 de l'ossature de pavillon 2. La doublure de custode 10b est fixée au montant 4 arrière et à l'ossature de soubassement 3, notamment au moins via un renfort de fixation 12 qu'elle comporte et qui est configuré pour être fixé à un longeron 5 de l'ossature de soubassement 3.

Sur les figures 2 à 5, les profilés 11a-11e composant l'armature de profilés 11 comprennent notamment un groupe de profilés 11a, 11b de rigidification du gousset 10a et/ou de la doublure de custode 10b, et un jeu de profilés 11c-11e de rigidification de l'aile arrière 8 du véhicule en bordure du passage de roue 9 qu'elle comporte.

Le groupe de profilés 11a, 11b de rigidification de la structure de plaques de forme 10 comprend un premier profilé 11a avant AV1 de rigidification globale de la doublure d'aile 7 et un deuxième profilé 11b arrière AR1 essentiellement affecté à la rigidification de la doublure de custode 10b. Le jeu de profilés 11c-11e de rigidification de l'aile arrière 8 comprend un profilé avant 11d et un profilé arrière 11e s'étendant suivant une direction verticale V1 en étant entretoisés par un profilé médian 11c suivant une direction longitudinale L1.

Les notions relatives vertical V1 et longitudinal L1 sont considérées dans un repère orthonormé définissant l'extension de la doublure d'aile 7. Les notions relatives supérieur et inférieur, ou autres notions apparentées comme surplomb ou base, sont considérées suivant la direction verticale V1. Les notions relatives avant AV1 et arrière AR1 sont considérées suivant la direction longitudinale L1 d'extension de la doublure d'aile 7.

Pour simplifier la lecture de la description de l'invention et sa compréhension, les notions relatives mentionnées concernant la doublure d'aile 7 et/ou ses composants 10a, 10b, 11a-11e, correspondent à celles appliquées communément à un véhicule automobile en station de progression au sol, comme illustré sur la figure 1.

Sur les figures 3 à 5, les composants de la doublure d'aile 7 comprenant les plaques de forme 10a, 10b et les profilés 11a-11e, sont assemblés entre eux en trois opérations 13a, 13b, 13c d'assemblage respectivement illustrées sur la figure 3, la figure 4 et la figure 5.

La figure 3 illustre une première opération 13a d'assemblage des profilés 11a-11e entre eux qui est réalisée à un premier poste de soudage 14a. Sur le schéma (a), les profilés 11a-11e sont représentés isolés les uns des autres préalablement à leur assemblage par soudage, notamment par points de soudure. L'armature de profilés 11 obtenue en sortie du premier poste de soudage 14a est illustrée sur le schéma (b).

Les profilés 11a, 11b du groupe de profilés de rigidification des plaques de forme 10a, 10b, sont disposés en surplomb du jeu de profilés 11c-11e de rigidification de l'aile arrière 8. Les profilés 11a, 11b dudit groupe sont assemblés entre eux via une fixation entre ledit premier profilé 11a et l'extrémité supérieure dudit deuxième profilé 11b.

Les profilés 11c-11e dudit jeu sont assemblés entre eux deux à deux. L'extrémité supérieure du profilé 11d avant AV1 et l'extrémité supérieure du profilé 11e arrière AR1 sont respectivement fixées aux extrémités longitudinales L1 du profilé médian 11c. Le profilé médian 11c est ainsi longitudinalement interposé entre le profilé 11d avant AV1 et le profilé 11e arrière AR1, en étant disposé au sommet dudit jeu de profilés 11c-11e.

Ledit groupe de profilés 11a, 11b et ledit jeu de profilés 11c-11e sont assemblés l'un à l'autre via les extrémités inférieures du premier profilé 11a et du deuxième profilé 11b dudit groupe de profilés 11a,11b, qui sont respectivement fixées au moins aux extrémités supérieures du profilé 11d avant AV1 et du profilé 11e arrière AR1, voire aussi aux extrémités du profilé médian 11c.

On notera dans ce contexte que le nombre de tôles constitutives des profilés 11c-11e qui sont fixées entre elles conjointement en une couche par un même point de soudure peut ne pas excéder deux points de soudure. Ceci procure une disponibilité de fixation ultérieure d'une autre tôle à ladite couche, notamment constitutive d'un composant de la structure de plaques de forme 10.

La figure 4 illustre une deuxième opération 13b d'assemblage des plaques de forme 10a, 10b entre-elles réalisée à un deuxième poste de soudage 14b. Sur le schéma (c), les plaques de forme 10a, 10b sont représentées isolées les unes des autres préalablement à leur assemblage par soudage, notamment par points de soudure.

La deuxième opération 13b d'assemblage peut être avantageusement réalisée simultanément à la réalisation de la première opération 13a d'assemblage. La structure de plaques de forme 10 obtenue en sortie du deuxième poste de soudage 14b est illustrée sur le schéma (d).

Le gousset 10a est fixé à sa base par points de soudure au sommet de la doublure de custode 10b. Le renfort de fixation 12 et des renforts d'ancrage 15a, 15b d'au moins un accessoire du véhicule à la doublure d'aile 7 sont fixés par points de soudure sur la structure de plaques de forme 10. Le renfort de fixation 12 est fixé à la base de la doublure de custode 10b en zone avant AV1. Un tel renfort de fixation 12 est formé d'une tôle de forme prolongeant verticalement V1 la doublure de custode 10b pour sa fixation au longeron 5 de l'ossature de soubassement 3.

Un renfort d'ancrage 15a supérieur affecté à la réception d'un enrouleur d'une ceinture de sécurité, est installé dans la zone de jonction entre le gousset 10a et la doublure de custode 10b. Le renfort d'ancrage 15a peut ainsi être exploité pour l'assemblage du gousset 10a avec la doublure de custode 10b. Un renfort d'ancrage 15b inférieur affecté à la réception d'un organe de fixation d'une banquette arrière, est fixé à la base de la doublure de custode 10b.

On notera dans ce contexte que le nombre de tôles constitutives des composants de la structure de plaques de forme 10 qui sont fixées entre elles conjointement en une couche par un même point de soudure peut ne pas excéder deux points de soudure.

La figure 5 illustre une troisième opération 13c d'assemblage entre l'armature de profilés 11 et la structure de plaques de forme 10, qui est réalisée à un troisième poste de soudage 14c.

Sur le schéma (e), l'armature de profilés 11 et la structure de plaques de forme 10 sont représentées isolées préalablement à leur assemblage par soudage, notamment par point de soudure. La troisième opération 13c d'assemblage est réalisée à l'issue de la première opération 13a d'assemblage et de la deuxième opération 13b d'assemblage. La doublure d'aile 7 obtenue en sortie du troisième poste de soudage 14c est illustrée sur le schéma (f).

L'assemblage entre l'armature de profilés 11 et la structure de plaques de forme 10 est réalisé par fixation du profilé médian 11c dudit jeu et des profilés 11a, 11b dudit groupe avec la structure de plaques de forme 10, via le gousset 10a et/ou via la doublure de custode 10b. Le profilé médian 11c est fixé à la base de la doublure de custode 10b et les profilés 11a, 11b dudit groupe sont fixés conjointement au gousset 10a et à la doublure de custode 10b. Le deuxième profilé 11b arrière AR1 est fixé avec la doublure de custode 10b à son extrémité supérieure via ledit renfort d'ancrage 15a supérieur.

Sur les figures 6 et 7 par exemple, il est au besoin tenu compte d'une limitation du nombre de tôles, en nombre inférieur ou égal à trois, qui sont conjointement assemblées entre elles par un même point de soudure.

En effet tel que précédemment visé, le procédé permet de privilégier une fixation entre eux des composants de l'armature de profilés 11 et une fixation entre eux des composants de la structure de plaques de forme 10, via des points de soudure reliant entre elles au plus deux tôles superposées. Cependant, une telle préférence peut finalement rendre complexe les modalités d'assemblage entre l'armature de profilés 11 et la structure de plaques de forme 10, voire aussi entre leurs composants respectifs.

Sur la figure 6 par exemple, un assemblage entre l'armature de profilés 11 et la structure de plaques de forme 10 est réalisé via trois points de soudure 16a fixant entre eux en une même couche de tôles le renfort d'ancrage 15a supérieur, le gousset 10a et l'extrémité supérieure du deuxième profilé 11b dudit groupe. Il en ressort une couche de trois épaisseurs de tôles qui sont conjointement fixées les unes aux autres via les points de soudure 16a.

Cependant, la doublure de custode 10b est susceptible de s'étendre en superposition sur la dite couche de trois épaisseur de tôles. Pour éviter une prise des points de soudure 16a conjointement sur quatre épaisseurs de tôles, la doublure de custode 10b comporte un dégagement 17 formé lors d'une opération préalable de découpe de la doublure de custode 10b lors de sa formation.

Ainsi, les points de soudure 16a fixant entre eux le renfort d'ancrage 15a supérieur, le gousset 10a et l'extrémité supérieure du deuxième profilé 11b dudit groupe, peuvent être ménagés dans le périmètre P1 du dégagement 17. Ceci évite ainsi que la tôle dont est issue la doublure de custode 10b porte à quatre le nombre d'épaisseurs de tôles conjointement fixées entre elles via les points de soudure 16a.

Sur la figure 7 par exemple encore, un assemblage entre eux des profilés 11a-11e composant l'armature de profilé 11 est réalisé par fixation, via deux points de soudure 16b, entre le profilé 11e arrière AR1, le profilé médian 11c dudit jeu de profilés et l'extrémité inférieure du deuxième profilé 11b. Un tel mode de fixation entre eux desdits profilés 11e, 11c et 11b présente l'avantage de conforter la robustesse de l'armature de profilés 11 procurant son maintien en conformation, sans excéder le nombre de trois épaisseurs de tôles conjointement fixées les unes aux autres via les points de soudure 16b.

## Revendications

1. Procédé d'assemblage entre eux des composants (10a, 10b, 11a-11e) en tôle d'une doublure d'aile (7) latérale arrière d'un véhicule automobile, lesdits composants comprenant au moins des profilés (11a-11e) de rigidification et des plaques de forme (10a, 10b) que comporte la doublure d'aile (7) à produire, **caractérisé en ce qu'**il comprend les opérations suivantes :
-) une première opération (13a) réalisée à un premier poste de soudage (14a), est une opération d'assemblage entre eux de l'ensemble des profilés (11a-11b) que comprend la doublure d'aile (7) en formant une armature de profilés (11),
-) une deuxième opération (13b) réalisée à un deuxième poste de soudage (14b), est une opération d'assemblage entre elles de l'ensemble des plaques de forme (10a, 10b) que comprend la doublure d'aile (7), en formant une structure de plaques de forme (10), puis
-) une troisième opération (13c) réalisée à un troisième poste de soudage (14c), est une opération d'assemblage entre elles de l'armature de profilés (11) et de la structure de plaques de forme (10).

2. Procédé selon la revendication 1, **caractérisé en ce que** la première opération (13a) comprend au moins un assemblage entre eux d'un jeu de profilés (11c-11e) formant conjointement un organe dédié à la rigidification d'une aile arrière (8) du véhicule en bordure d'un passage de roue (9) qu'elle comporte, d'au moins un profilé (11a) de jonction entre au moins deux plaques de forme (10a, 10b) que comprend la doublure d'aile (7) et d'au moins un profilé (11b) raidisseur de l'une au moins des plaques de forme (10a, 10b).

3. Procédé selon l'une quelconque des revendications 1 et 2, **caractérisé en ce que** la deuxième opération (13b) comprend au moins un assemblage entre elles d'au moins deux plaques de forme (10a, 10b) formant respectivement une doublure de custode (10b) et un gousset (10a) disposés en prolongement l'un de l'autre et dédiés à la fixation de la doublure d'aile (7) à une armature de caisse (1) du véhicule.

4. Procédé selon l'une quelconque des revendications 1 à 3, **caractérisé en ce que** la deuxième opération (13b) comprend au moins un assemblage à l'une au moins des plaques de forme (10a, 10b), d'au moins un renfort d'ancrage (15a, 15b) dédié à l'ancrage d'au moins un accessoire du véhicule sur la doublure d'aile (7).

5. Procédé selon l'une quelconque des revendications 1 à 4, **caractérisé en ce que** la deuxième opération (13b) comprend au moins un assemblage à l'une au moins des plaques de forme (10a, 10b) d'au moins un renfort de fixation (12) dédié à la fixation de la doublure d'aile (7) à une ossature de soubassement (3) que comprend la caisse du véhicule.

6. Procédé selon l'une quelconque des revendications 1 à 5, **caractérisé en ce que** la troisième opération (13c) est réalisée par soudage entre elles de tôles constitutives des composants (10a, 10b, 11a-11e) de la doublure d'aile (7), via des points de soudure (16a, 16b) reliant entre elles au plus trois épaisseurs de tôles, le procédé comprenant au besoin une opération préalable de de formation d'un dégagement (17) dans au moins une plaque de forme (10a) constitutive de la structure de plaques de forme (10), ledit besoin étant relatif à une réduction du nombre de tôles fixées conjointement les unes aux autres via au moins un même point de soudure (16a, 16b).

7. Station d'assemblage entre eux de composants (10a, 10b, 11a-11e) d'une doublure d'aile (7) latérale arrière d'un véhicule automobile configurée pour la mise en œuvre d'un procédé selon l'une quelconque des revendications 1 à 6, **caractérisée en ce qu'**elle comprend :
-) un premier poste de soudage (14a) entre eux des composants (11a-11e) de l'armature de profilés (11), en sortie duquel l'armature de profilés (11) est obtenue,
-) un deuxième poste de soudage (14b) entre eux des composants (10a, 10b) de la structure de plaques de forme (10), en sortie duquel la structure de plaques de forme (10) est obtenue,
-) un troisième poste de soudage (14c) entre elles de l'armature de profilés (11) et de la structure de plaques de forme (10), en sortie duquel la doublure d'aile (7) est achevée.

8. Doublure d'aile (7) latérale arrière d'un véhicule automobile comprenant un ensemble de profilés (11a-11e) et de plaques de forme (10a, 10b) fixés entre eux et obtenue par mise en œuvre d'un procédé selon l'une quelconque des revendications 1 à 6, caractérisée :
-) en ce que la doublure d'aile (7) comprend une dite armature de profilés (11) composée desdits profilés (11a-11e) solidaires entre eux en formant un premier ensemble monobloc, et une dite structure de plaques de forme (10) composée desdites plaques de forme (10a, 10b) solidaires entre elles en formant un deuxième ensemble monobloc, et
-) en ce que l'armature de profilés (11) et la structure de plaques de forme (10) sont assemblées l'une à l'autre par fixation des plaques de forme (10a, 10b) avec au moins un profilé (11a, 11b, 11c) de l'armature de profilés (11), en étant dissociables l'une de l'autre sans perte de leur intégrité au regard de la conservation de l'intégralité des composants (11a-11e et 10a,10b) respectifs du premier ensemble monobloc et du deuxième ensemble monobloc.

9. Doublure d'aile (7) selon la revendication 8, **caractérisée en ce que** les tôles qui sont constitutives de composants (11a-11e et 10a, 10b) respectifs de la doublure d'aile (7) et qui sont au moins en partie superposées en une couche de tôles, sont fixées entre elles conjointement par au moins un même point de soudure (16a, 16b) en une dite couche de tôles comprenant au plus trois épaisseurs de tôles.

10. Doublure d'aile (7) selon l'une quelconque des revendications 8 et 9, **caractérisée en ce que** l'une quelconque au moins des plaques de forme (10a, 10b) comporte au moins un dégagement (17) dans le périmètre (P1) duquel est ménagé au moins un point de soudure (16a) fixant conjointement entre elles au plus trois tôles participantes d'une même couche de tôles superposées.

## Patentansprüche

1. Verfahren zum Zusammenbauen von Bauteilen (10a, 10b, 11a-11e) aus Blech eines hinteren seitlichen Flügelfutters (7) eines Kraftfahrzeugs, wobei die Bauteile mindestens Versteifungsprofile (11a-11e) und Formplatten (10a, 10b) umfassen, die das herzustellende Flügelfutter (7) aufweist, **dadurch gekennzeichnet, dass** es die folgenden Schritte umfasst:
-) ein erster Vorgang (13a), der an einer ersten Schweißstation (14a) ausgeführt wird, ein Vorgang des Zusammenfügens der Gesamtheit der Profile (11a-11b), die die Flügeleinlage (7) umfasst, unter Bildung einer Profilbewehrung (11) ist,
-) bei einem zweiten Vorgang (13b), der an einer zweiten Schweißstation (14b) durchgeführt wird, handelt es sich um einen Vorgang des Zusammenfügens der Gesamtheit der Formplatten (10a, 10b), die die Flügeleinlage (7) umfasst, unter Bildung einer Formplattenstruktur (10), dann
-) ein dritter Vorgang (13c), der an einer dritten Schweißstation (14c) durchgeführt wird, ist ein Vorgang des Zusammenfügens der Profilbewehrung (11) und der Formplattenstruktur (10) miteinander.

2. Verfahren nach Anspruch 1, **dadurch gekennzeichnet, dass** der erste Arbeitsgang (13a) wenigstens eine Verbindung zwischen sich eines Satzes von Profilen (11c-11e) umfasst, die zusammen ein Organ bilden, das der Versteifung eines hinteren Flügels (8) des Fahrzeugs am Rand eines Raddurchgangs (9), den es aufweist, gewidmet ist, wenigstens ein Profil (11a) zur Verbindung zwischen wenigstens zwei Formplatten (10a, 10b), die die Flügeleinlage (7) umfasst, und wenigstens ein Profil (11b) zur Versteifung des Flügels mindestens eine der Formplatten (10a, 10b).

3. Verfahren nach einem der Ansprüche 1 und 2, **dadurch gekennzeichnet, dass** der zweite Vorgang (13b) mindestens eine Verbindung zwischen sich von mindestens zwei Formplatten (10a, 10b) umfasst, die jeweils eine Seitenfalte (10b) und einen Zwickel (10a) bilden, die in Verlängerung zueinander angeordnet sind und der Befestigung der Flügelfalte (7) an einer Karosseriebewehrung (1) des Fahrzeugs dienen.

4. Verfahren nach einem der Ansprüche 1 bis 3, **dadurch gekennzeichnet, dass** der zweite Vorgang (13b) wenigstens eine Verbindung mit wenigstens einer der Formplatten (10a, 10b) wenigstens einer Verankerungsverstärkung (15a, 15b) umfasst, die der Verankerung wenigstens eines Zubehörteils des Fahrzeugs an der Flügelauskleidung (7) gewidmet ist.

5. Verfahren nach einem der Ansprüche 1 bis 4, **dadurch gekennzeichnet, dass** der zweite Schritt (13b) mindestens eine Verbindung mit mindestens einer der Formplatten (10a, 10b) mindestens einer Befestigungsverstärkung (12) umfasst, die der Befestigung der Flügeleinlage (7) an einem Unterbau (3), der den Fahrzeugaufbau umfasst, gewidmet ist.

6. Verfahren nach einem der Ansprüche 1 bis 5, **dadurch gekennzeichnet, dass** der dritte Schritt (13c) durch Verschweißen von die Komponenten (10a, 10b, 11a-11e) der Flügeleinlage (7) bildenden Blechen miteinander über Schweißpunkte (16a, 16b) erfolgt, die höchstens drei Blechdicken miteinander verbinden, wobei das Verfahren gegebenenfalls einen vorherigen Schritt der Bildung einer Aussparung (17) in mindestens einer die Formplattenstruktur (10) bildenden Formplatte (10a) umfasst wobei die Notwendigkeit auf eine Verringerung der Anzahl der über mindestens eine einzige Schweißstelle (16a, 16b) miteinander verbundenen Bleche bezogen ist.

7. Station zum Zusammenbauen von Bauteilen (10a, 10b, 11a-11e) eines hinteren seitlichen Flügelfutters (7) eines Kraftfahrzeugs, das zur Durchführung eines Verfahrens nach einem der Ansprüche 1 bis 6 konfiguriert ist, **dadurch gekennzeichnet, dass** sie umfasst:
-) eine erste Schweißstation (14a) zwischen den Bauteilen (11a-11e) der Profilbewehrung (11), aus der die Profilbewehrung (11) herausgeführt ist,
-) eine zweite Schweißstation (14b) zwischen den Bauteilen (10a, 10b) der Formplattenstruktur (10), aus der die Formplattenstruktur (10) herausgeführt ist,
-) eine dritte Schweissstation (14c) zwischen der Profilbewehrung (11) und der Formplattenstruktur (10), an deren Ausgang die Flügeleinlage (7) fertig gestellt ist.

8. Hinteres Seitenflügelfutter (7) eines Kraftfahrzeugs mit einer Anordnung von Profilen (11a-11e) und Formplatten (10a, 10b), die aneinander befestigt sind und durch Anwendung eines Verfahrens nach einem der Ansprüche 1 bis 6 erhalten werden, **dadurch gekennzeichnet, dass** :
-) dass die Flügelauskleidung (7) eine Profilbewehrung (11) umfasst, die aus den Profilen (11a-11e) besteht, die einstückig miteinander verbunden sind und eine erste einstückige Anordnung bilden, und eine Formplattenstruktur (10), die aus den Formplatten (10a, 10b) besteht, die einstückig miteinander sind und eine zweite einstückige Anordnung bilden, und
-) der Profilanker (11) und der Formplattenaufbau (10) durch Befestigen der Formplatten (10a, 10b) mit mindestens einem Profil (11a, 11b, 11c) des Profilankers (11) miteinander verbunden sind, wobei sie voneinander trennbar sind, ohne dass ihre Unversehrtheit bei der Erhaltung der Gesamtheit der jeweiligen Komponenten (11a-11e und 10a, 10b) des ersten Monoblocks verloren geht und der zweiten einstückigen Baugruppe.

9. Flügelfutter (7) nach Anspruch 8, **dadurch gekennzeichnet, dass** die Bleche, die aus den jeweiligen Komponenten (11a-11e und 10a, 10b) des Flügelfutters (7) bestehen und die zumindest teilweise in einer Blechschicht übereinander angeordnet sind, miteinander durch mindestens einen gleichen Schweißpunkt (16a, 16b) in einer Blechschicht, die höchstens drei Blechdicken umfasst, verbunden sind.

10. Flügelfutter (7) nach einem der Ansprüche 8 und 9, **dadurch gekennzeichnet, dass** mindestens eine der Formplatten (10a, 10b) mindestens eine Aussparung (17) aufweist, in deren Umfang (P1) mindestens ein Schweißpunkt (16a) ausgebildet ist, der gemeinsam höchstens drei teilnehmende Bleche einer gleichen Schicht übereinander liegender Bleche befestigt.

## Claims

1. Method of assembling together sheet metal components (10a, 10b, 11a-11e) of a rear lateral wing lining (7) of a motor vehicle, said components comprising at least stiffening profiles (11a-11e) and shaped plates (10a, 10b) which the wing lining (7) to be produced comprises, **characterized in that** it comprises the following operations:
-) a first operation (13a) carried out at a first welding station (14a) is an operation of assembling together all the profiles (11a-11b) which the wing lining (7) comprises by forming a profiled reinforcement (11),
-) a second operation (13b) carried out at a second welding station (14b) is an operation of assembling together all the shape plates (10a, 10b) that the wing lining (7) comprises, forming a shape plate structure (10), then
-) a third operation (13c), carried out at a third welding station (14c), is an operation of assembling together the profiled reinforcement (11) and the shape plate structure (10).

2. A method according to claim 1, **characterized in that** the first operation (13a) comprises at least one assembly between them of a set of profiles (11c-11e) which together form a member dedicated to stiffening a rear wing (8) of the vehicle at the edge of a wheel passage (9) which it comprises, of at least one profile (11a) for joining between at least two shaped plates (10a, 10b) which the wing lining (7) comprises and of at least one profile (11b) for stiffening the wing at least one of the shaped plates (10a, 10b).

3. A method according to any one of claims 1 and 2, **characterized in that** the second operation (13b) comprises at least one assembly between them of at least two shaped plates (10a, 10b) forming respectively a rear quarter lining (10b) and a gusset (10a) arranged in extension of one another and dedicated to the attachment of the wing lining (7) to a body frame (1) of the vehicle.

4. Method according to any one of Claims 1 to 3, **characterized in that** the second operation (13b) comprises at least one assembly to at least one of the shaped plates (10a, 10b) of at least one anchoring reinforcement (15a, 15b) dedicated to anchoring at least one accessory of the vehicle to the wing lining (7).

5. Method according to any one of Claims 1 to 4, **characterized in that** the second operation (13b) comprises at least one assembly to at least one of the shaped plates (10a, 10b) of at least one fixing reinforcement (12) dedicated to fixing the wing lining (7) to a basement framework (3) which comprises the body of the vehicle.

6. Method according to any one of claims 1 to 5, **characterized in that** the third operation (13c) is carried out by welding together sheets constituting the components (10a, 10b, 11a-11e) of the wing lining (7), via welding points (16a, 16b) interconnecting at most three sheet thicknesses, the method comprising, if necessary, a preliminary operation of forming a clearance (17) in at least one shaped plate (10a) constituting the shaped plate structure (10a) 0), said requirement being related to a reduction in the number of sheets fixed together via at least one same welding point (16a, 16b).

7. Station for joining together components (10a, 10b, 11a-11e) of a rear lateral wing lining (7) of a motor vehicle configured for carrying out a method according to any one of claims 1 to 6, **characterized in that** it comprises:
-) a first welding station (14a) between components (11a-11e) of the profile reinforcement (11), at the outlet of which the profile reinforcement (11) is obtained,
-) a second welding station (14b) between them of the components (10a, 10b) of the shape plate structure (10), at the output of which the shape plate structure (10) is obtained,
-) a third welding station (14c) between the profile reinforcement (11) and the shape plate structure (10), at the outlet of which the wing lining (7) is completed.

8. Rear side wing lining (7) of a motor vehicle comprising an assembly of profiles (11a-11e) and shaped plates (10a, 10b) fixed to each other and obtained by implementing a method according to any one of claims 1 to 6, characterized:
-) in that the wing lining (7) comprises a said reinforcement of profiles (11) composed of said profiles (11a-11e) integral with each other, forming a first monoblock assembly, and a said structure of shaped plates (10) composed of said shaped plates (10a, 10b) integral with each other, forming a second monoblock assembly, and
-) in that the profile reinforcement (11) and the shape plate structure (10) are assembled to each other by fixing the shape plates (10a, 10b) with at least one profile (11a, 11b, 11c) of the profile reinforcement (11), being detachable from each other without loss of their integrity with regard to the preservation of the entirety of the respective components (11a-11e and 10a, 10b) of the first one-piece assembly and of the second one-piece assembly one piece.

9. Wing lining (7) according to claim 8, **characterized in that** the sheets which are components (11a-11e and 10a, 10b) of the wing lining (7) and which are at least partly superposed in a sheet metal layer, are fixed together by at least one same welding point (16a, 16b) in a said sheet metal layer comprising at most three sheet metal thicknesses.

10. Wing lining (7) according to either of Claims 8 and 9, **characterized in that** at least one of the shaped plates (10a, 10b) has at least one clearance (17) in the perimeter (P1) of which is provided at least one welding point (16a) which jointly fixes at most three participating sheets of the same layer of superposed sheets.
